# EUROPEAN PATENT SPECIFICATION

(11) **EP 3 221 268 B1**
(45) Date of publication and mention of the grant of the patent: **03.10.2018**
(21) Application number: 15798406.3
(22) Date of filing: 20.11.2015
(51) Int. Cl.: C02F 1/42, B01J 47/02, B01J 47/14, B01J 39/00, A47J 31/60, C02F 1/00

(54) **FILTER CARTRIDGE FOR A MACHINE FOR PREPARING BEVERAGES**
FILTERPATRONE FÜR EINEN GETRÄNKEZUBEREITUNGSAUTOMATEN
CARTOUCHE FILTRANTE POUR MACHINE DE PRÉPARATION DE BOISSONS

(30) Priority: 20.11.2014 IT PD20140315
(43) Date of publication of application: 27.09.2017
(73) Proprietor: Laica S.p.A., 36021 Barbarano Vicentino (VI) (IT)
(72) Inventor: MORETTO, Maurizio, I-36100 Vicenza (IT)
(74) Representative: Locas, Davide
(86) International application number: PCT/EP2015/077231
(87) International publication number: WO 2016/079303

(56) References cited:
- EP-A1- 1 106 226
- WO-A1-2004/007374
- WO-A1-2014/033147
- WO-A1-2014/131905
- WO-A2-2014/048862
- DE-A1- 3 840 276
- DE-U1-202012 103 731
- US-A- 5 468 373

## Description

The subject matter of the invention is a filter cartridge for a machine for preparing beverages of the type suitable for being housed in a tank connected to the feed circuit of the machine for treating the water present therein.

In the context of the reference technical sector, it is known to use machines for preparing coffee and hot beverages in general, which are provided with a tank intended to contain the water required for preparing the beverage.

The presence of such a tank is typically required in machines for domestic use, to avoid connecting the machine to the water supply network and at the same time to ensure a sufficient amount of water in order to provide a sufficient number of coffee portions.

For the purpose of improving the quality of the water present in the tank, for example by removing impurities present therein or by softening it, it is also known that replaceable cartridge filter systems can be used in coffee machines, such as the one described in patent application WO 2012/146567 A1.

Further relevant patent applications disclosing filter cartridges of similar type are WO2014/048862, WO2014/033147, WO2014/131905, US5468373, EP1106 226 and DE3840276.

Patent application WO 2012/146567 relates to a replaceable cartridge filter comprising two separate chambers holding an appropriate ion exchange material. This filter is configured such that the liquid to be treated is divided into a first and second fraction, separate from each other, which are filtered exclusively by the first and second chamber, respectively.

The first and second fraction of the liquid thus filtered are collected in an outlet conduit which is open at the bottom and intended for discharging the treated liquid from the cartridge filter.

In one embodiment, a bypass opening is also provided on the outlet conduit so that unfiltered water is not admitted through either the first or the second chamber.

The applicant has observed that, although this solution makes it possible to improve the control of the composition of the treated liquid with respect to other types of known cartridges, the filtering action proves suboptimal from a functional point of view and is not very satisfactory in terms of quality.

The technical problem addressed by the present invention is therefore that of making available a filter cartridge for coffee preparation machines that is designed, in terms of structure and function, to remedy all the drawbacks reported with reference to the above-mentioned prior art.

This problem is resolved by means of a filter cartridge for a machine for preparing coffee and hot or cold beverages in general, produced according to claim 1.

Preferred features of the invention are defined in the dependent claims.

The teaching according to the present invention allows excellent filtering of the liquid to be treated and, at the same time, improved control of the composition of the liquid treated.

Furthermore, the cartridge according to the present invention is of relatively compact dimensions, making it easy to use.

The features and other advantages of the invention will be more clearly apparent from the following detailed description of a preferred but not exclusive embodiment thereof, which is indicative and non-restrictive, with reference to the attached drawings, in which:
- Fig. 1 is a schematic sectional view of a first embodiment of a filter cartridge according to the invention;
- Fig. 2 is a schematic sectional view of a second embodiment of a filter cartridge according to the invention; and
- Fig. 3 is a schematic sectional view of a third embodiment of a filter cartridge, this embodiment not according to the invention.

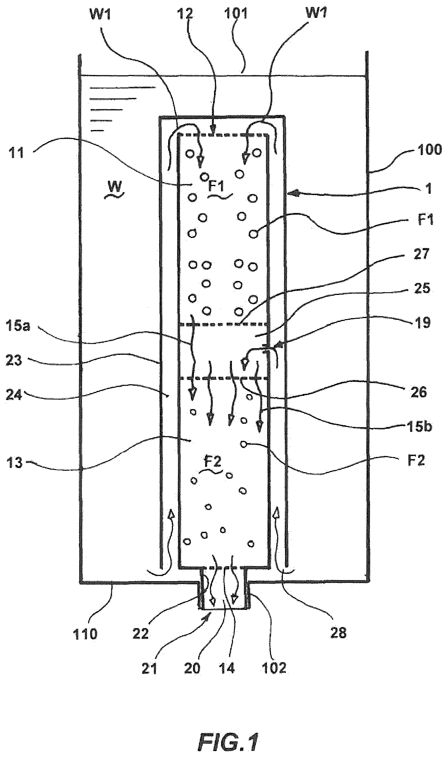

With reference initially to Fig. 1, a filter cartridge for machines for preparing beverages such as coffee, tea or barley coffee is shown with the overall reference numeral 1.

The filter cartridge 1 is of the type suitable for being installed in a tank 100 intended to contain a liquid W (for example water) to be used for preparing the beverage.

By way of example, the tank 100 can be formed by a recipient having a cylindrical structure, which defines a perimeter wall thereof, within the upper portion of which an inlet aperture 101 for pouring the water into the recipient is defined. Obviously, however, alternative shapes are also conceivable for the tank.

The tank 100 is connected to the coffee machine (not shown in the figure), in particular to the water feed circuit within it by means of a connection element 102 formed within a bottom wall 110 of the tank 100. By way of example, the connection element 102 can be produced in the form of a nozzle that is inserted into a corresponding seating (not shown in the figure), which is produced in the machine and connected to the circuit thereof.

The filter cartridge 1 comprises a main body, elongated in shape, within which an ion exchange material is housed, preferably ion exchange resins, for treating the liquid W.

With reference to Fig. 1, the filter cartridge 1 comprises a main inlet 12 for admitting liquid W to be treated into the main body, and an outlet 14 for discharging the treated liquid from the main body.

Preferably, the outlet 14 is followed by a collection chamber 20 through which the treated liquid leaving the second chamber 2 is channelled towards an outlet opening 21 in the cartridge.

Still according to a preferred embodiment, the outlet opening 21 is defined within a connecting collar 22, which can be coupled to the connection element 102 of the tank 100 in such a way that only water that has passed through the filter cartridge 1 can be supplied to the feed circuit of the machine. At any rate, in more general terms, the outlet opening 21 can be associated with the feed circuit in such a way that the water leaving said outlet is supplied to the machine for the purpose of preparing the beverage.

The filter cartridge 1 comprises an outer casing 23 which is connected to the main body and is coupled thereto in such a way as to form an inlet channel 24 so that the liquid W to be treated can flow towards the main inlet 12. In the present invention, the inlet channel 24 has the shape of a cavity which is concentric with the main body.

The ion exchange filter material F1, F2 is provided only inside the main body of the filter, the liquid flowing unfiltered through the inlet channel 24. In other words no filter material is provided within the inlet channel 24.

This is particular advantageous if the outer casing 23 is removably coupled to the main body. In this manner, the main body comprising the filer material, that is subjected to exhaustion, can be substituted individually from the outer casing 23.

Preferably, the outer casing 23 covers the main body over substantially its entire length, leaving a common passage 28, for the liquid, defined between the bottom 110 of the tank 100 and a base portion of the outer casing 23. The liquid to be filtered inside the tank 100 can thus be drawn into the filter cartridge 1, passing through the passage 28, for example by using a suction mechanism in the machine for preparing beverages that sucks the liquid through the seating for the connection element 102. It is known that the positioning of the passage 28 within the bottom of the tank advantageously allows nearly all the liquid present therein to be used.

It should also be noted that in the tank comprising the filter cartridge of the present invention also the outlet 14 and the common passage 28 are provided at the bottom wall 110 of the tank 100.

The filter cartridge 1 further comprises a first chamber 11 containing at least one first ion exchange filter material F1 for treating the liquid W to be treated, and a second chamber 13 which is in fluid communication with the first chamber 11 and contains at least one second ion exchange filter material F2 for treating the liquid W to be treated. The chambers 11, 13 are separate from each other and, according to a preferred embodiment, are defined by the walls of the main body itself and by a filter-type separation element 26, 27, which is preferably defined by a mesh filter. In the present embodiment there are two separate mesh filters, which define respective openings which allow for the passage of liquid and at the same time hold the filter material.

As will be explained below, the presence of two separate chambers allows the liquid W to be filtered in two successive stages so as to improve control of the composition of the treated liquid.

Preferably, the composition of the second ion exchange filter material F2 differs from the composition of the first ion exchange material F1.

In one embodiment of the invention, the first ion exchange filter material F1 comprises hydrogen cations H and a type of cation among those belonging to the group consisting of sodium Na, potassium K and magnesium Mg.

With regard to the second ion exchange filter material F2, this comprises cations of calcium Ca, magnesium Mg and a type of cation among those belonging to the group consisting of potassium K and sodium Na.

Because different ion exchange filter material is provided in the two chambers 11, 13, the liquid in the two chambers can be treated differently, such that the filtering actuated by one chamber is independent of the other.

Moreover, this solution allows the liquid to be enriched, as it flows through each chamber 11, 13, with appropriate ancillary substances capable of giving further properties to the liquid.

With reference to the figures, the main inlet 12 and the outlet 14 are produced respectively by an inlet section of the first chamber 11 and by an outlet section of the second chamber 13.

In detail, the main inlet 12 and the outlet 14 are preferably defined by a perforated surface of the first and second chamber 11, 13, respectively, which allow the corresponding filter material F1, F2 to be held, simultaneously allowing the liquid to flow through. Typically, the first and second filter material F1, F2 are in the form of granules.

Preferably, the main inlet 12 and the outlet 14 are produced by means of a mesh filter.

With reference to the figures, a main filtration path 15a is defined between the main inlet 12 and the outlet 14 so that a first fraction W1 of liquid to be treated can flow through the first chamber 11 and then through the second chamber 13.

In other words, the second chamber 13 is positioned in the main body in such a way that the first fraction W1 of liquid W, admitted into the main body through the main inlet 12, passes through the second chamber 13 only after having passed through the first chamber 11.

With reference to the embodiments of the invention illustrated in the figures, wherein the main body is shaped substantially as a cylindrical tube, or more in general as an elongate body, the first chamber 11 is thus superimposed over the second chamber 13 when the filter cartridge 1 is put into use, i.e. when the connecting collar 22 of the filter cartridge 1 is coupled to the connection element 102 of the tank 100.

The common passage 28 is also provided at the same end of the main body.

The first chamber 11 is spaced apart from the second chamber 13 by the interposition of one or more intermediate chambers 25 which is/are defined between the separation elements 26 and 27, so that the first fraction W1 of liquid to be treated passes sequentially through the first chamber 11 and one or more intermediate chambers, and then into the second chamber 13.

Ion exchange filter material and/or another type of filtering means can be held within such intermediate chambers.

The main body of the cartridge 1 further comprises an auxiliary inlet 19, which is separate from and independent of the main inlet 12 and intended for admitting liquid to be treated.

In particular, the auxiliary inlet 19 is defined by a perforated section of the main body. Preferably, the auxiliary inlet 19 is provided on the outer surface of the main body and, in the present preferred embodiment, faces the intermediate chamber 25 defined between the two chambers. It should be noted that the presence of the intermediate chamber allows the already partly filtered liquid coming from the first chamber to be mixed with the unfiltered liquid coming from the tank.

The size of the section of the auxiliary inlet 19 contributes to determining the flow rate of the second fraction W2, of liquid to be treated, which is admitted into the main body.

The main body is thus configured so as to define a filtration path 15b between the auxiliary inlet 19 and the outlet 14 so that a second fraction W2 of liquid to be treated can flow through the second chamber 13 without first passing into the first chamber 11.

The second fraction W2 of the liquid to be treated is thus a fraction of the liquid W contained in the tank 100 that is not intended to pass into the first chamber 11.

It should, moreover, be observed that at least one segment of the filtration path 15b can coincide with a segment of the filtration path 15a.

Preferably, the segment of the filtration path 15b defined within the second chamber 13 coincides with that of the filtration path 15a.

In that case, a liquid is produced inside the second chamber 13 by mixing the first fraction of liquid W1 with the second fraction of liquid W2 that will be discharged from the main body via the outlet 14.

In the present embodiment, the intermediate chamber 25 is arranged in the main body above at least one portion of the second chamber 13 in such a way that the second fraction W2, of the liquid to be treated, which is admitted into the chamber 25 via the auxiliary inlet 19, passes into said chamber 25 and then passes into the second chamber 13, from which it is discharged via the outlet 14 after having passed through the second ion exchange filter material F2.

With reference to Fig. 1-3, the main body of the filter cartridge 1 is shaped as an elongated tube, wherein the main inlet 12 and the outlet 14 are provided within longitudinally opposite portions of the main body.

This permits optimal dimensions in relation to the length of the filtration path. Furthermore, it is particularly well suited to providing the two filtration paths described above.

When the filter cartridge 1 is put into use, i.e. when the connecting collar 22 of the filter cartridge 1 is coupled to the connection element 102 of the tank 100, the main inlet 12 and the outlet 14 are turned towards the top and bottom, respectively.

In the present embodiment, the liquid W contained in the tank 100 is impelled to rise back up the inlet channel 24 so that it is introduced into the main body of the filter cartridge 1, flowing through the main inlet 12 and through the auxiliary inlet 19.

With reference now to Fig. 1, in the present embodiment, when the cartridge is in use, the first chamber 11 is superimposed over the second chamber 13 from which it is also spaced apart by the interposition of the intermediate chamber 25.

In other words, since the two chambers are arranged in an axially successive position, the first filtration path passes initially through the first chamber and then the second chamber when the liquid is drawn into the main body via the main inlet 12.

The chamber 25 is in fluid communication with both the second chamber 13 via the opening 26 and the first chamber 11 via an opening 27 which is preferably defined by a perforated section of the first chamber 11 that is able to hold the filter material F1 and, at the same time, to allow the liquid to flow through.

The chamber 25 is therefore interposed on the filtration path 15a between the first and second chamber 11, 13.

The first fraction W1 of liquid to be treated W therefore accesses the first chamber 11 via the main inlet 12, passes through the first ion exchange filter material F1, reaches the chamber 25 through the opening 27 and finally enters the second chamber 13, in which it passes through the second ion exchange filter material F2.

The auxiliary inlet 19 is provided within a side portion of the main body 10, preferably at a distance from the main inlet 12 and the outlet 14.

In particular, the auxiliary inlet 19 is provided within the lateral wall of the conduit 25 so that the filtration path 15b of the second fraction W2 of liquid to be treated can originate in the chamber 25 and develops in the second chamber 13, avoiding passing into the first chamber 11.

It should be noted that in this embodiment of the invention the first and second fraction W1, W2 merge in the chamber 25, and are at least partly mixed before passing into the second chamber 13.

In the second chamber 13, the first and second fraction W1, W2 of liquid pass through the second ion exchange material F2, descending towards the outlet 14, from which the liquid treated in this way is discharged from the main body.

According to the invention, the first fraction of liquid W1 is therefore subject to a first treatment carried out by the first ion exchange material F1 followed by a second treatment carried out by the second ion exchange material F2. Treatment of the second fraction of liquid W2 is, however, limited to the second ion exchange material F2.

This solution makes it possible to lengthen the filtration path of at least one fraction of liquid to be treated so as to increase the filtering time to which it is subjected in order to obtain optimal purification of the treated liquid and, at the same time, permits better control of the composition of the liquid treated.

The provision of the filtration path 15b according to the invention ensures that the second fraction W2 of liquid is filtered by the second ion exchange filter material F2 in an unrelated and independent manner from the first ion exchange filter material F1, so that its composition is not influenced by the first filter material.

If, instead, the second fraction W2 of liquid were also treated by the first ion exchange filter material F1, control of the composition of the treated liquid would be compromised by the variability of the ion exchange process owing to the different substances present in the two ion exchange materials used.

The variation in the dimensions of the section of the auxiliary inlet 19 also allows effective control of the composition of the treated liquid.

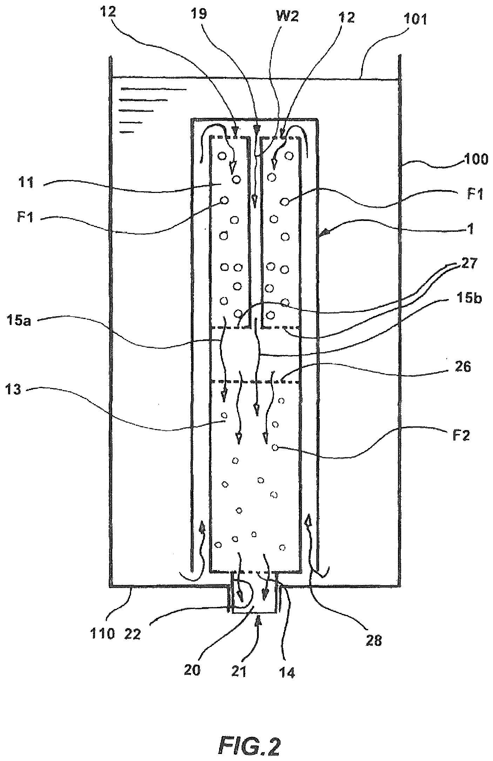

In the embodiment in Fig. 2, the auxiliary opening 19 is produced within the upper end of the main body and is connected to the intermediate chamber 25 by a conduit 25', which preferably extends in parallel with the first filtration path through the first chamber 25.

The auxiliary inlet 19 is thus provided close to the main inlet 12 and preferably extends therearound.

The present embodiment advantageously makes it possible to avoid the presence of the auxiliary inlet 19 in an intermediate position along the channel 24, thus favouring a more uniform flow towards the main and auxiliary inlets.

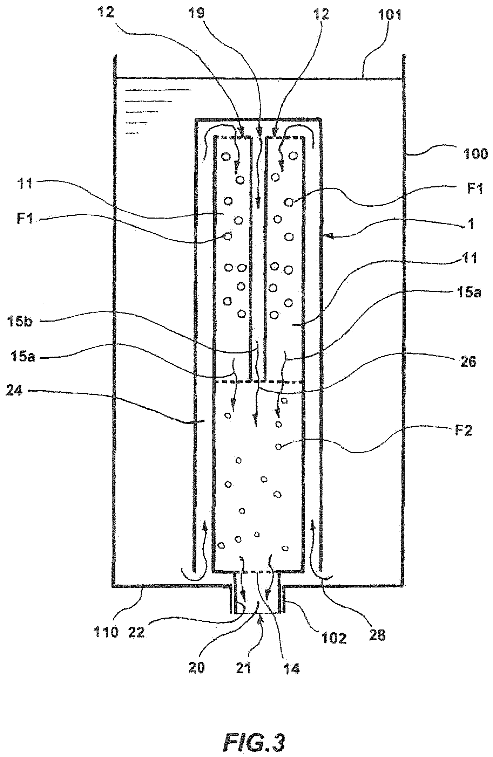

With reference to Fig. 3, according to an embodiment, that is not part of the present invention, the chambers 11 and 12 can communicate directly, that is, without the intermediate chamber 25 being interposed. In that case, the conduit 25' communicates directly with the second chamber 13 without the liquid entering from the auxiliary inlet 19 being mixed first with that coming out of the chamber 11.

This solution makes it possible to obtain a longer filtration path than in the previous embodiments, although this is to the detriment of the mixing effect of the previous embodiments, which allows more homogeneous filtration to take place in the second chamber.

The invention thus remedies the problem posed and at the same time offers a plurality of advantages, including providing excellent filtering action and better control of the composition of the treated liquid. Furthermore, the filter cartridge according to the invention is of relatively compact dimensions, making it easy to use.

## Claims

1. Filter cartridge (1) for a machine for preparing beverages, comprising a main body for housing filter material for treating a liquid (W), said main body comprising:
• a main inlet (12) for admitting liquid to be treated into said main body, and an outlet (14) for discharging treated liquid from the main body;
• a first chamber (11) containing at least one first ion exchange filter material (F1) for treating liquid to be treated;
• a second chamber (13), in fluid communication with said first chamber (11), containing at least one second ion exchange filter material (F2) for treating liquid to be treated;
• a main filtration path (15a) extending between said main inlet (12) and said outlet (14) through said first chamber (11) and subsequently through said second chamber (13);
and further comprising an auxiliary inlet (19), which is separate from and independent of said main inlet (12) for admitting liquid to be treated and positioned in such a way as to define an auxiliary filtration path (15b) which is at least partly separate from said main filtration path (15a) and extends between said auxiliary inlet (19) and said outlet (14) without passing through said first chamber (11), the liquid (W) being admitted in the filter cartridge (1) through a common passage (28) in communication both with said main inlet (12) and said auxiliary inlet (19) through an inlet channel (24) in which no filter material in provided, wherein said main body is elongate-shaped, said outlet (14) and said common passage (28) being provided at the same end of said main body, **characterised in that** the main inlet (12) and the outlet (14) are provided within longitudinally opposite portions of the main body and **in that** said filter cartridge further comprises an outer casing (23) which is connected to the main body and said main body is coupled thereto in such a way as to form said inlet channel (24) so that the liquid to be treated can flow towards the main inlet and the auxiliary inlet, said inlet channel (24) having the shape of a cavity concentric with said main body and said main body further comprising an intermediate chamber (25) interposed between said first (11) and second chamber (13), within which the fluid admitted through said auxiliary inlet (19) travels before flowing into said second chamber (13) and in which partly filtered liquid coming from the first chamber (11) is mixed with unfiltered liquid coming from a tank in which the cartridge is installed.

2. Filter cartridge (1) according to claim 1, wherein said auxiliary inlet (19) is made within said intermediate chamber (25).

3. Filter cartridge (1) according to claim 1, wherein said auxiliary inlet (19) is made within one end of said main body in which said main inlet (12) is defined, said cartridge further comprising a conduit (25') that puts said auxiliary inlet (19) into communication with said second chamber (13) without passing through said first chamber (11).

4. Filter cartridge (1) according to claim 3, wherein said conduit (25') extends through said first chamber (11) in parallel with said main filtration path.

5. Filter cartridge (1) according to any of the preceding claims, wherein said main body is tubular in shape, said first chamber (11) being placed in a position that is axially separate from said second chamber (13).

6. Filter cartridge (1) according to any of the preceding claims, wherein the composition of said second ion exchange filter material (F2) differs from the composition of the first ion exchange filter material (F1).

7. Filter cartridge (1) according to any of the preceding claims, wherein said outer casing (23) is removably coupled to said main body.

8. Water tank (100) for a machine for preparing beverages comprising a connection element (102) for connecting the tank to a water feed circuit of the machine, a filter cartridge (1) according to any of the preceding claims, coupled to said connection element (102), wherein said connection element (102) as well as said outlet (14) and said common passage (28) are provided at a bottom wall (110) of the tank (100).

9. Water tank (100) according to claim 8, wherein the outer casing (23) covers the main body over substantially its entire length, so as to leave said common passage (28) defined between the bottom (110) of the tank (100) and a base portion of the outer casing (23).

## Patentansprüche

1. Filterkartusche (1) für eine Maschine zum Vorbereiten von Getränken mit einem Hauptkörper zum Aufnehmen von Filtermaterial zum Behandeln einer Flüssigkeit (W), wobei der Hauptkörper aufweist:
- einen Haupteinlass (12) zum Zuführen einer zu behandelnden Flüssigkeit in den Hauptkörper und einen Auslass (14) zum Abgeben einer behandelten Flüssigkeit vom Hauptkörper;
- eine erste Kammer (11), die zumindest ein erstes lonenaustausch-Filtermaterial (F1) zum Behandeln einer zu behandelnden Flüssigkeit enthält,
- eine zweite Kammer (13), die mit der ersten Kammer (11) in Flüssigkeitsverbindung ist, die zumindest ein zweites lonenaustausch-Filtermaterial (F2) zum Behandeln einer zu behandelnden Flüssigkeit enthält,
- einen Hauptfiltrationsweg (15a), der sich zwischen dem Haupteinlass (12) und dem Auslass (14) durch die erste Kammer (11) und anschließend durch die zweite Kammer (13) erstreckt,
und die ferner einen Hilfseinlass (19) aufweist, der vom Haupteinlass (12) zum Zuführen einer zu behandelnden Flüssigkeit getrennt und unabhängig ist und derart positioniert ist, um einen Hilfsfiltrationsweg (15b) zu bilden, der zumindest teilweise vom Hauptfiltrationsweg (15a) getrennt ist und sich zwischen dem Hilfseinlass (19) und dem Auslass (14), ohne durch die erste Kammer (11) hindurchzugehen, erstreckt, wobei die Flüssigkeit (W), die der Filterkartusche (1) zugeführt wird, durch einen gemeinsamen Durchgang (28) sowohl mit dem Haupteinlass (12) als auch mit dem Hilfseinlass (19) durch einen Einlasskanal (24) in Verbindung ist, in dem kein Filtermaterial vorgesehen ist, wobei der Hauptkörper länglich geformt ist, wobei der Auslass (14) und der gemeinsame Durchgang (28) an demselben Ende des Hauptkörpers vorgesehen sind,
**dadurch gekennzeichnet,**
- **dass** der Haupteinlass (12) und der Auslass (14) innerhalb von gegenüberliegenden Längsbereichen des Hauptkörpers vorgesehen sind , und dass die Filterkartusche ferner ein äußeres Gehäuse (23) aufweist, das mit dem Hauptkörper verbunden ist, und der Hauptkörper damit derart verbunden ist, um den Einlasskanal (24) zu bilden, so dass die zu behandelnde Flüssigkeit zum Haupteinlass und Hilfseinlass fließen kann, wobei der Einlasskanal (24) mit der Form eines Hohlraums mit dem Hauptkörper konzentrisch ist und der Hauptkörper ferner eine Zwischenkammer (25) aufweist, die zwischen der ersten (11) und der zweiten Kammer (13) angeordnet ist, innerhalb der sich die zugeführte Flüssigkeit durch den Hilfseinlass (19) bewegt, bevor sie in die zweite Kammer (13) fließt, und in der eine teilweise gefilterte Flüssigkeit, die von der ersten Kammer (11) kommt, mit einer ungefilterten Flüssigkeit gemischt wird, die von einem Behälter kommt, in dem die Kartusche eingebaut ist.

2. Filterkartusche (1) gemäß Anspruch 1, wobei der Hilfseinlass (19) innerhalb der Zwischenkammer (25) ausgebildet ist.

3. Filterkartusche (1) gemäß Anspruch 1, wobei der Hilfseinlass (19) innerhalb eines Endes des Hauptkörpers ausgebildet ist, in dem der Haupteinlass (12) ausgebildet ist, wobei die Kartusche ferner eine Leitung (25') aufweist, die den Hilfseinlass (19) in eine Verbindung mit der zweiten Kammer (13) bringt, ohne durch die erste Kammer (11) hindurchzugehen.

4. Filterkartusche (1) gemäß Anspruch 3, wobei sich die Leitung (25') durch die erste Kammer (11), die mit dem Hauptfiltrationsweg parallel ist, erstreckt.

5. Filterkartusche (1) gemäß einem der vorhergehenden Ansprüche, wobei der Hauptkörper rohrförmig ist, wobei die erste Kammer (11) in einer Position angeordnet ist, die axial von der zweiten Kammer (13) getrennt ist.

6. Filterkartusche (1) gemäß einem der vorhergehenden Ansprüche, wobei die Zusammensetzung des zweiten lonenaustausch-Filtermaterials (F2) sich von der Zusammensetzung des ersten lonenaustausch-Filtermaterials (F1) unterscheidet.

7. Filterkartusche (1) gemäß einem der vorhergehenden Ansprüche, wobei das äußere Gehäuse (23) entfernbar mit dem Hauptkörper verbunden ist.

8. Wasserbehälter (100) für eine Maschine zum Vorbereiten von Getränken mit einem Verbindungselement (102) zum Verbinden des Behälters mit einem Wasserzuführkreislauf, wobei eine Filterkartusche (1) gemäß einem der vorhergehenden Ansprüche mit dem Verbindungselement (102) verbunden ist, wobei das Verbindungselement (102) sowie der Auslass (14) und der gemeinsame Durchgang (28) an einer Bodenwand (110) des Behälters (100) vorgesehen sind.

9. Wasserbehälter (100) gemäß Anspruch 8, wobei das äußere Gehäuse (23) den Hauptkörper über seine im Wesentlichen gesamte Länge bedeckt, um so den gemeinsamen Durchgang (28) zu hinterlassen, der zwischen dem Boden (110) des Behälters (100) und einem Basisbereich des äußeren Gehäuses (23) ausgebildet ist.

## Revendications

1. Cartouche de filtre (1) destinée à une machine de préparation de boissons, comprenant
un corps principal destiné à contenir une matière filtrante afin de traiter un liquide (W),
ledit corps principal comprenant :
- une admission principale (12) destinée à admettre un liquide à traiter dans ledit corps principal, et une évacuation (14) destine à évacuer le liquide traité du corps principal ;
- une première chambre (11) qui contient au moins une première matière filtrante à échange d'ions (F1) afin de traiter un liquide à traiter ;
- une seconde chambre (13), en communication de fluide avec ladite première chambre (11), qui contient au moins une seconde matière filtrante à échange d'ions (F2) afin de traiter un liquide à traiter ;
- un trajet de filtration principal (15a) qui s'étend entre ladite admission principale (12) et ladite évacuation (14) à travers ladite première chambre (11) puis à travers ladite seconde chambre (13) ;
et qui comprend en outre une admission auxiliaire (19), qui est distincte et indépendante de ladite admission principale (12), afin d'admettre le liquide à traiter, et qui est positionnée de façon à définir un trajet de filtration auxiliaire (15b) qui est au moins partiellement distinct dudit trajet de filtration principal (15a) et qui s'étend entre ladite admission auxiliaire (19) et ladite évacuation (14) sans passer par ladite première chambre (11), le liquide (W) étant admis dans la cartouche de filtre (1) par le biais d'un passage commun (28) en communication avec ladite admission principale (12) et ladite admission auxiliaire (19) par le biais d'un canal d'admission (24) dans lequel aucune matière filtrante n'est prévue, dans lequel ledit corps principal est de forme allongée, ladite évacuation (14) et ledit passage commun (28) étant prévus à la même extrémité dudit corps principal,
**caractérisé en ce que** l'admission principale (12) et l'évacuation (14) sont prévues dans des parties longitudinalement opposées du corps principal et **en ce que** ladite cartouche de filtre comprend en outre une enceinte externe (23) qui est reliée au corps principal et ledit corps principal est relié à celle-ci de façon à former ledit canal d'admission (24) de sorte que le liquide à traiter puisse circuler vers l'admission principale et l'admission auxiliaire, ledit canal d'admission (24) ayant la forme d'une cavité concentrique avec ledit corps principal, et ledit corps principal comprenant en outre une chambre intermédiaire (25) interposée entre lesdites première (11) et seconde (13) chambres, dans lesquelles le fluide admis par ladite admission auxiliaire (19) se déplace avant de circuler dans ladite seconde chambre (13), et dans lesquelles le liquide partiellement filtré qui provient de la première chambre (11) est mélangé avec le liquide non filtré qui provient d'un réservoir dans lequel la cartouche est installée.

2. Cartouche de filtre (1) selon la revendication 1, dans laquelle ladite admission auxiliaire (19) est créée dans ladite chambre intermédiaire (25).

3. Cartouche de filtre (1) selon la revendication 1, dans laquelle ladite admission auxiliaire (19) est créée dans une extrémité dudit corps principal dans laquelle ladite admission principale (12) est définie, ladite cartouche comprenant en outre un conduit (25') qui place ladite admission auxiliaire (19) en communication avec ladite seconde chambre (13) sans passer par ladite première chambre (11).

4. Cartouche de filtre (1) selon la revendication 3, dans laquelle ledit conduit (25') s'étend dans ladite première chambre (11) parallèlement audit trajet de filtration principal.

5. Cartouche de filtre (1) selon l'une quelconque des revendications précédentes, dans laquelle ledit corps principal est de forme tubulaire, ladite première chambre (11) étant placée à un emplacement qui est axialement séparé de ladite seconde chambre (13).

6. Cartouche de filtre (1) selon l'une quelconque des revendications précédentes, dans laquelle la composition de ladite seconde matière filtrante à échange d'ions (F2) diffère de la composition de la première matière filtrante à échange d'ions (F1).

7. Cartouche de filtre (1) selon l'une quelconque des revendications précédentes, dans laquelle ladite enceinte externe (23) est reliée de manière amovible audit corps principal.

8. Réservoir d'eau (100) destiné à une machine de préparation de boissons comprenant un élément de raccordement (102) destiné à relier le réservoir à un circuit d'alimentation en eau de la machine, une cartouche de filtre (1) selon l'une quelconque des revendications précédentes, reliée audit élément de raccordement (102), dans lequel ledit élément de raccordement (102) et ladite évacuation (14) et ledit passage commun (28) sont prévus au niveau d'une paroi inférieure (110) du réservoir (100).

9. Réservoir d'eau (100) selon la revendication 8, dans lequel l'enceinte externe (23) recouvre le corps principal sensiblement sur toute sa longueur, de façon à laisser ledit passage commun (28) défini entre le fond (110) du réservoir (100) et une partie de base de l'enceinte externe (23).
